# EUROPEAN PATENT SPECIFICATION

(11) **EP 1 997 593 B1**
(45) Date of publication and mention of the grant of the patent: **18.11.2009**
(21) Application number: 08156036.9
(22) Date of filing: 12.05.2008
(51) Int. Cl.: B25J 15/06, B28B 13/06

(54) **Unit for picking up ceramic products or the like**
Einheit zum Aufnehmen von Keramikerzeugnissen oder dergleichen
Unité pour prélever des produits en céramique ou similaires

(30) Priority: 31.05.2007 IT BO20070385
(43) Date of publication of application: 03.12.2008
(73) Proprietor: SACMI Cooperativa Meccanici Imola Società Cooperativa, 40026 Imola (BO) (IT)
(72) Inventor: Bambi, Domenico, 40054 Budrio (Bologna) (IT); Falletta, Fabrizio, 40024 Castel San Pietro Terme (Bologna) (IT); Medri, Ivano, 48022 Lugo (Ravenna) (IT)
(74) Representative: Lanzoni, Luciano

(56) References cited:
- EP-A- 0 312 924
- EP-A- 0 640 450
- JP-A- 2 139 191
- US-A- 2003 164 620

## Description

This invention relates to a unit for picking up ceramic products or the like, in particular ceramic products constituting parts of sanitaryware.

Such a unit is for example disclosed in document EP 0 640 450 A.

As is well known, ceramic sanitaryware (such as washbasins, toilet bowls, bidets, flush tanks and the like) is made by casting a fluid mixture (known as "slip" in the jargon of the trade, consisting of a ceramic body in aqueous suspension) in customary moulds with a porous structure, which may be divided into two or more parts.

The mould gives the article of sanitaryware the required shape and after a certain length of time (necessary to draw out a part of the water) the article is extracted from the mould in a solid form, known as "greenware" (still having a water content of between 17% and 20% by weight) and hence still subject to plastic deformation.

Some of these products, such as, for example, flush tank lids, because they are small in size and relatively simple in shape, are preferably made using individual moulds having two or more cavities located side by side so that a large number of products can be obtained in a single casting cycle. In addition to that, the simultaneous extraction of these products from the mould (by opening it into its two half-moulds), an operation known as demoulding, is usually performed by a servo- or robot-controlled mechanical device equipped with an extraction tray mounted on an operating arm.

A picking up unit according to the preamble of claim 1 is known from document US 2003/0164620 A (see embodiment shown on figure 8).

At present, the extraction tray consists of at least one operating pickup surface having at least one perimetric gasket for contact with the product and a central cavity for generating the vacuum necessary for picking up the product.

The mechanical device moves the gasket into contact with a surface of the product, activates the vacuum generating means to enable the product to be picked up and then transfers the product to a table, normally horizontal, where finishing operations are performed on it.

A product like the one mentioned above can be handled in two different ways: by its "noble" surface (that is to say, the surface that will be in view when the finished product is assembled) or by the opposite, less noble, surface that will be hidden by the other part of the flush tank.

At present, both these solutions have some disadvantages:
- if the lid is picked up by the noble surface, there is the risk of the pickup device leaving permanent marks on it due to the inevitable contact with the gasket or equivalent suction cup systems (it should be remembered that the product is still in a plastically deformable state); these marks may be visible as depressions or irregular impressions on the surface of the finished product.
- if the lid is picked up by the less noble surface, additional trays must be provided on which the product can be deposited to enable finishing operations to be carried out; the supporting surface of these trays must be shaped (for example slightly arched and hardly every flat) to match the shape of the noble surface, which means that each different lid shape requires a specific deposit tray to be made.

In other words, picking up the products in the green state by the noble surfaces has the obvious advantage of making subsequent operations simpler since the opposite surfaces (less noble) are usually flat and do not require particularly complex trays, but increases the risk of marking the noble surfaces and thus raises the number of end products that must be scrapped.

Picking up the product in the green state by the less noble surface, on the other hand, reduces the risk of marking the visible parts but requires a large number of accessories for subsequent operations, thus increasing production cycle times and costs and reducing production efficiency.

Moreover, whether a product is picked by its noble or less noble surface, there is always the risk of its sticking to the tray, after being demoulded, on account of the vacuum and the fact that the surface by which it is picked is wet. That means the product must be forcibly removed from the tray - for example reversing the direction of air flow or even manually - thus obviously slowing down product and creating the risk of damaging the product.

This invention has for an aim to overcome the above mentioned disadvantages by providing a unit for picking up ceramic products or the like which can hold the ceramic product securely and effectively by its noble surface and which has a low impact on the surface so as to reduce the risk of marking the surface.

Accordingly, this invention achieves this aim by providing a unit for picking up ceramic product or the like comprising the technical characteristics set out in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a perspective view, with some parts cut away, of a unit according to the invention, for picking up ceramic products or the like;
- Figure 2 is a schematic side view of the pickup unit of Figure 1 with a part of it not shown;
- Figures 3 to 5 are schematic side views, with some parts cut away to better illustrate others, of alternative embodiments of the pickup unit according to the invention;
- Figure 6 shows an enlarged detail from Figure 5;
- Figure 7 illustrates the pickup unit of Figure 3 in a plan view from above.

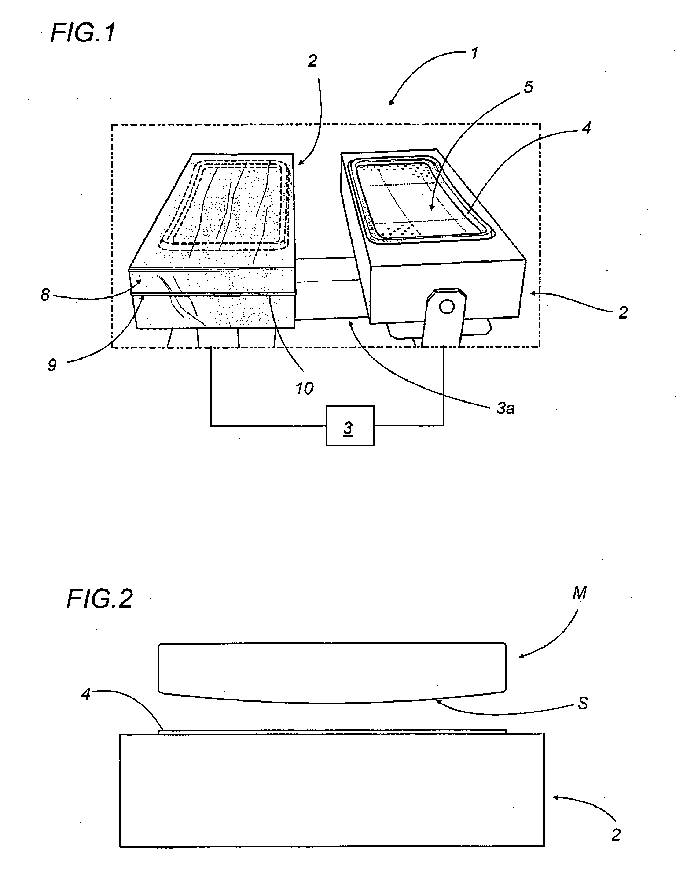

With reference to the accompanying drawings, in particular Figures 1, 2, 5 and 7, the unit according to the invention is used for picking up ceramic products M or the like, such as for, example, the flush tank lid shown in Figure 2.

In particular, the unit, which is labelled 1 in its entirety, is used for extracting the product M from the respective half mould (not shown) after a known step of making the product M by casting a fluid mixture (known as slip in the jargon of the trade, consisting of a ceramic body in aqueous suspension) in customary moulds with a porous structure.

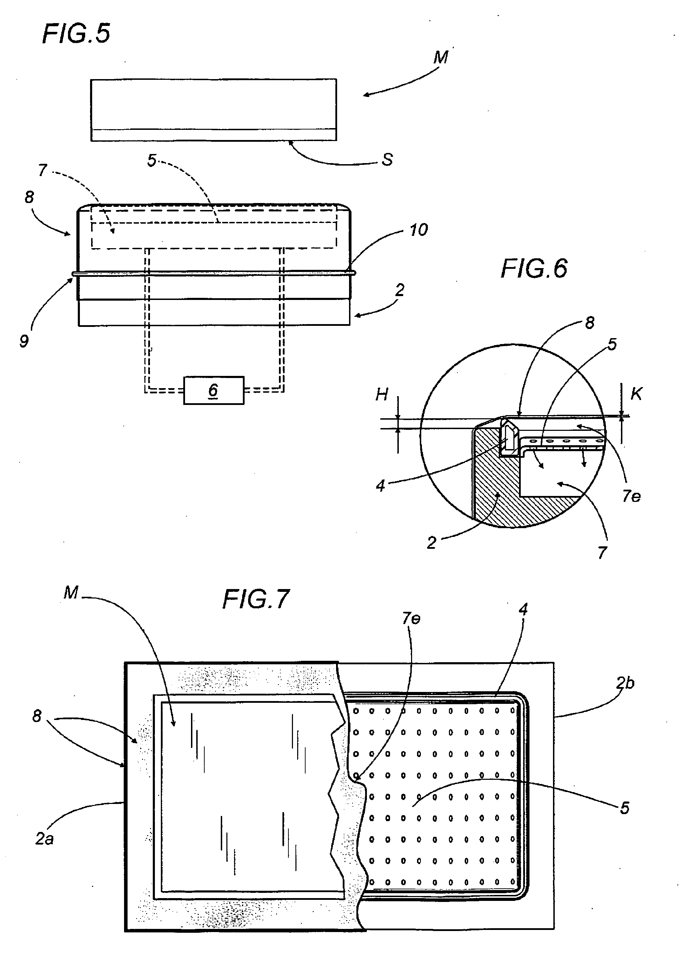

The unit 1 basically comprises:
- a tray 2 associated with a movement unit 3 (for example, but without limiting the scope of the invention, of the robot-controlled type) illustrated schematically as a block, connected to a frame 3a for mounting the tray 2;
- a sealing gasket 4 located at least along the perimeter of at least one operating wall 5 of the tray 2 and designed to work in contact with a surface S of the product M;
- means 6 (of known type and therefore illustrated as a block in Figure 5) for generating a vacuum inside at least one first chamber 7 made by the operating wall 5 with the inside of the tray 2; the first chamber 7 is in communication with at least one second chamber 7e through the operating wall 5, which is permeable thanks to intrinsic porosity or passages (holes made in the wall 5) made especially for this purposes (as explained below).

The second chamber 7e is perimetrically delimited by the gasket 4: thanks to this structure, the above mentioned vacuum is applied to the opposite and facing surfaces of the wall 5 and of the surface S of the product M, respectively, when the gasket 4 comes into stable contact with the surface S in order to pick the product up.

The unit 1 further comprises a porous interface element 8 permeable to air located at least on the sealing gasket 4 and forming a surface that is more deformable than the gasket 4 and impermeable to liquids, or hydro repellent, interposed between the gasket 4 and the surface S of the product M when the above mentioned stable contact is made.

In other words, at least the contact gasket and, preferably, in the sealed vacuum area or second chamber 7e thus has placed over it a surface which is more deformable than it and which is porous so that air can be sucked in from the outside in order to hold the product M securely but without significantly deforming the surface of the product, especially if the contact surface is the "noble" surface, that is to say, the surface that remains in view when the product is finished and assembled. Preferably, between the interface element 8 and the tray 2, there are interposed means 9 for locking / unlocking the element 8 to / from the tray 2 and in such a way as to position it on the gasket 4 and move it away from the gasket 4.

In one non-limiting embodiment, the interface element may be composed of a single deformable sheet 8, with suitable porosity and impermeability properties, covering the entire operating wall 5 of the tray 2 and forming a top (see Figures 1, and from 3 to 5) that completely covers the gasket 4, too.

In Figures 1 and 5, the sheet 8 is connected to the locking/unlocking means 9, which comprise an elastic ring element 10 for engaging/disengaging the sheet 8 with/from the perimetric surface of the tray 2 close to the operating wall 5.

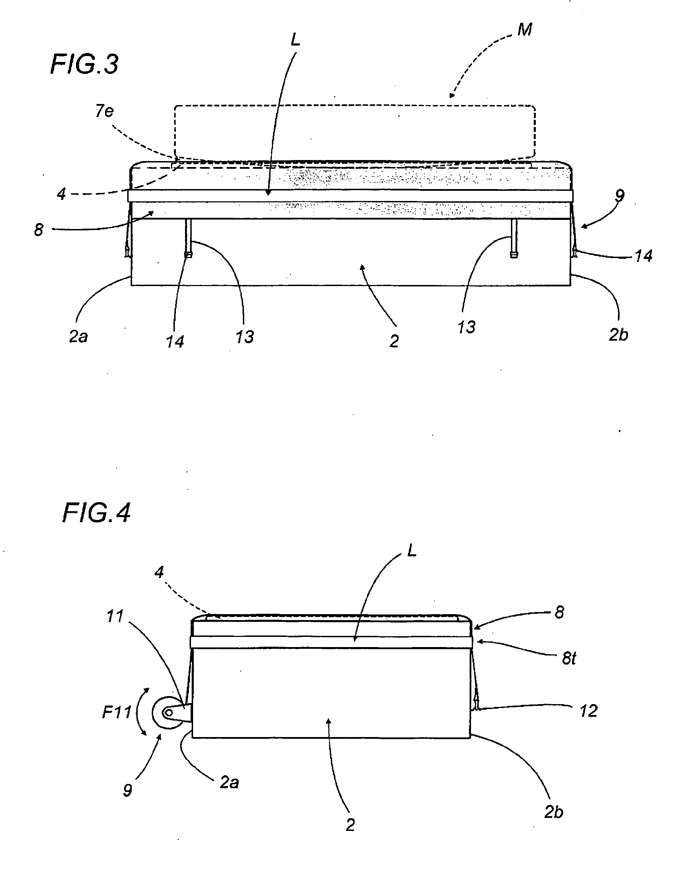

In an alternative embodiment, illustrated in Figure 4, the locking/unlocking means 9 comprise a winding/unwinding roller 11 mounted on a wall 2a of the tray 2 and designed to roll up and unroll the sheet 8.

The movement of the sheet 8 (see arrow F11) enables the operating wall 5 to be covered and uncovered as required; when the operating wall 5 is covered, the sheet 8 is latched securely to a fastening element 12 located on the wall 2b on the opposite side of the tray 2 relative to the wall 2a.

In another alternative embodiment, illustrated in Figure 3, the locking/unlocking means 9 comprise tie rods 13 associated with at least two opposite sides of the sheet 8 and able to be fastened or unfastened to or from respective protrusions 14 located on corresponding walls of the tray 2.

These locking and unlocking means 9 may also constitute means 8t for tensioning the surface that comes into contact with the product M in order to prevent creases from forming on the surface of the sheet.

Obviously, other types of tensioning means 8t can be used instead of the locking means, such as for example, plates L for rigidly retaining the sheet 8 after it has been tensioned (see Figure 4).

Further, the sheet 8 is easy to wash, which means that optimum working conditions can be quickly and easily restored when the surface of the sheet 8 is dirtied by particles of the product M adhering to it.

A further characteristic feature of the interface element described above is that, since the gasket 4 protrudes partly, by a quantity H, from the operating wall 5 of the tray 2, the thickness K of the sheet 8 is sufficient to limit the difference in height H between the operating wall 5 and the protruding portion of the gasket 4 (see Figure 6).

In other words, the thickness K of the sheet 8 reduces or cancels the "step" created by the gasket 4 and allows the surface of the operating wall 5 to be made even more level, thereby eliminating any features that can cause deformation of the product M.

Furthermore, the operating wall 5 may be made as a single part with the tray 2 or it may be associated with the tray 2.

The operating wall 5 may be of the rigid type, equipped with a plurality of holes made in the wall 5 itself in such a way as to enable the two chambers 7, 7e to communicate with the vacuum source, as mentioned above. In this case, the operating wall 5 may be made from metal netting.

Alternatively, the operating wall 5 may be made of a porous material obtained, for example, by sintering or polymerization so that, in this case too, the two chambers 7, 7e can communicate with the vacuum source.

Lastly, the operating wall 5 may be advantageously shaped to match the surface S of the product M to be picked up, thus further improving the performance of the pick-up unit.

A pick-up unit made as described above fully achieves the aforementioned aims thanks to the interface element between the product and the gasket, which allows:
- levelling of the irregular surfaces of the gasket, thus protecting the noble surface of the product (thanks to the higher degree of deformability);
- greater protection between the product and the suction areas of the unit, preventing solid particles of slip from entering the suction areas (thanks to porosity and impermeability to liquids);
- quicker and easier maintenance of the interface thanks to the locking/unlocking means and the washability of the sheet;
- optimum and clean detachment of the product from the tray thanks to the intrinsic properties of the interface which prevents the product from sticking to the tray after being extracted from the mould.

The invention described above is susceptible of industrial application and may be modified and adapted in several ways without thereby departing from the scope of the claims.

## Claims

1. A unit for picking up ceramic products or the like, said unit (1) comprising at least:
- a tray (2) associated with a movement unit (3);
- a sealing gasket (4) located at least along the perimeter of at least one operating wall (5) of the tray (2) and designed to work in contact with a surface (S) of the product (M);
- means (6) for generating a vacuum inside at least one first chamber (7) made by the operating wall (5) with the inside of the tray (2) and being in communication with at least one second chamber (7e) through the operating wall (5) which is permeable to liquids; the second chamber (7e) being perimetrically delimited by the gasket (4) in such a way that vacuum is applied to the opposite and facing surfaces of the wall (5) and of the surface (S) of the product (M), respectively, when the gasket (4) comes into stable contact with the surface (S) to enable the product to be picked up; the unit (1) being **characterized in that** it further comprises a porous interface element (8) permeable to air located at least on the sealing gasket (4) and forming a surface that is more deformable than the gasket (4) and impermeable to liquids, or hydro repellent, interposed between the gasket (4) and the surface (S) of the product (M) when the stable contact is made.

2. The unit according to claim 1, **characterized in that** between the interface element (8) and the tray (2) there are interposed means (9) for locking /unlocking the interface element (8) to/from the tray (2) and in such a way as to position it on the gasket (4) and move it away from the gasket (4), respectively.

3. The unit according to claim 1, **characterized in that** the interface element is composed of a single deformable sheet (8) with suitable porosity and impermeability properties, fully covering the operating wall (5) of the tray (2) and the gasket (4) like a cap.

4. The unit according to claim 2, **characterized in that** the interface element is composed of a sheet (8) and the means (9) for locking and unlocking the sheet (8) comprise an elastic ring element (10) for engaging/disengaging the sheet (8) with/from the perimetric surface of the tray (2) close to its operating wall (5).

5. The unit according to claim 2, **characterized in that** the interface element is composed of a sheet (8) and the locking/unlocking means (9) comprise a winding/unwinding roller (11) mounted on a wall (2a) of the tray (2) and designed to roll up and unroll the sheet (8) in such a way that it covers and uncovers the operating wall (5) and, when the operating wall (5) is covered, is latched securely to a fastening element (12) located on the opposite wall (2b) of the tray (2).

6. The unit according to claim 2, **characterized in that** the interface element is composed of a sheet (8) and the locking/unlocking means (9) comprise tie rods (13) associated with at least two opposite sides of the sheet (8) and able to be fastened or unfastened to or from respective protrusions (14) located on corresponding walls of the tray (2).

7. The unit according to claim 1, **characterized in that** the interface element (8) is composed of a sheet (8) that is washable.

8. The unit according to claim 1, **characterized in that** the interface element is composed of a sheet (8) acted upon by means (8t) for tensioning at least the surface that comes into contact with the product (M) so as to prevent creases from forming on the surface of the sheet (8).

9. The unit according to claims 1, 2, 5, 6 and 8, **characterized in that** the tensioning means (8t) are composed of the locking/unlocking means (9).

10. The unit according to claim 1, where the gasket (4) protrudes partly, by a quantity (H), from the operating wall (5) of the tray (2), **characterized in that** interface element is composed of a sheet (8) whose thickness (K) is sufficient at least to limit the difference in height (H) between the operating wall (5) and the protruding portion of the gasket (4).

11. The unit according to claim 1, **characterized in that** the operating wall (5) is made as a single part with the tray (2).

12. The unit according to claim 1, **characterized in that** the operating wall (5) is associated with the tray (2) .

13. The unit according to claim 1, **characterized in that** the operating wall (5) is of the rigid type, equipped with a plurality of holes made in the wall (5) itself in such a way as to enable the two chambers (7, 7e) to communicate with the source of the vacuum.

14. The unit according to claim 1, **characterized in that** the operating wall (5) is made of a porous material so as to enable the two chambers (7, 7e) to communicate with the source of the vacuum.

15. The unit according to claim 1, **characterized in that** the operating wall (5) is made of a porous material obtained by sintering so as to enable the two chambers (7, 7e) to communicate with the source of the vacuum.

16. The unit according to claim 1, **characterized in that** the operating wall (5) is made of a porous material obtained by polymerization so as to enable the two chambers (7, 7e) to communicate with the source of the vacuum.

17. The unit according to claim 1, **characterized in that** the operating wall (5) is made from metal netting.

18. The unit according to claim 1, **characterized in that** the operating wall (5) is shaped to match the surface (S) of the product (M) to be picked up.

## Patentansprüche

1. Einheit zum Aufnehmen von keramischen Erzeugnissen oder dergleichen, wobei die genannte Einheit (1) zumindest Folgendes beinhaltet:
- eine Schale (2), die mit einer Antriebseinheit (3) verbunden ist;
- eine Dichtung (4), die zumindest entlang des Umfangs mindestens einer Arbeitswand (5) der Schale (2) angeordnet ist und dafür ausgelegt ist, in Berührungskontakt mit einer Oberfläche (S) des Erzeugnisses (M) zusammenzuwirken;
- Mittel (6) zum Erzeugen eines Unterdrucks in zumindest einer ersten Kammer (7), die von der Arbeitswand (5) zusammen mit der Innenseite der Schale (2) gebildet wird, und die über die flüssigkeitsdurchlässige Arbeitswand (5) in Verbindung mit zumindest einer zweiten Kammer (7e) steht; wobei die zweite Kammer (7e) entlang ihres Umfangs von der Dichtung (4) derart begrenzt wird, dass der Unterdruck auf die einander gegenüberliegenden und zugewandten Flächen der Wand (5) beziehungsweise der Oberfläche (S) des Produktes (M) wirkt, wenn ein stabiler Kontakt zwischen der Dichtung (4) und der Oberfläche (S) hergestellt ist, um das Aufnehmen des Erzeugnisses zu ermöglichen; wobei die Einheit (1) **dadurch gekennzeichnet ist, dass** sie ferner ein poröses Trennflächenelement (8) beinhaltet, das luftdurchlässig und zumindest auf der Dichtung (4) angeordnet ist und eine Oberfläche bildet, die verformbarer ist als die Dichtung (4) und undurchlässig für Flüssigkeiten oder wasserabweisend, und die zwischen der Dichtung (4) und der Oberfläche (S) des Erzeugnisses (M) eingelegt ist, wenn der stabile Kontakt hergestellt ist.

2. Einheit nach Anspruch 1, **dadurch gekennzeichnet, dass** zwischen dem Trennflächenelement (8) und der Schale (2) Mittel (9) zum Festklemmen / Lösen des Trennflächenelementes (8) auf / von der Schale (2) so angeordnet sind, dass sie es auf der Dichtung (4) anordnen beziehungsweise von der Dichtung (4) entfernen können.

3. Einheit nach Anspruch 1, **dadurch gekennzeichnet, dass** das Trennflächenelement aus einem einzigen verformbaren Tuch (8) mit geeigneten Porositäts- und Undurchlässigkeitseigenschaften besteht, das die Arbeitswand (5) der Schale (2) und die Dichtung (4) haubenartig und vollständig bedeckt.

4. Einheit nach Anspruch 2, **dadurch gekennzeichnet, dass** das Trennflächenelement aus einem Tuch (8) besteht und die Mittel (9) zum Festklemmen und Lösen des Tuchs (8) ein elastisches Ringelement (10) zum Anbinden / Freigeben des Tuchs (8) an die / von der Umfangsoberfläche der Schale (2) in der Nähe ihrer Arbeitswand (5) beinhalten.

5. Einheit nach Anspruch 2, **dadurch gekennzeichnet, dass** das Trennflächenelement aus einem Tuch (8) besteht und die Festklemm- und Lösemittel (9) eine Auf- und Abwickelrolle (11) beinhalten, die auf einer Wand (2a) der Schale (2) montiert ist und dafür ausgelegt ist, das Tuch (8) derart ab- und aufzuwickeln, dass es die Arbeitswand (5) bedeckt beziehungsweise aufdeckt und, wenn die Arbeitswand (5) bedeckt ist, sicher an einem Befestigungselement (12) auf der gegenüberliegenden Wand (2b) der Schale (2) befestigt wird.

6. Einheit nach Anspruch 2, **dadurch gekennzeichnet, dass** das Trennflächenelement aus einem Tuch (8) besteht und die Festklemm- und Lösemittel (9) Zugstangen (13) beinhalten, die zumindest mit zwei einander gegenüberliegenden Seiten des Tuchs (8) verbunden sind und an / von entsprechenden Vorsprüngen (14) befestigt / gelöst werden können, die auf entsprechenden Wänden der Schale (2) angeordnet sind.

7. Einheit nach Anspruch 1, **dadurch gekennzeichnet, dass** das Trennflächenelement (8) aus einem waschbaren Tuch (8) besteht.

8. Einheit nach Anspruch 1, **dadurch gekennzeichnet, dass** das Trennflächenelement aus einem Tuch (8) besteht, auf das Mittel (8t) zum Spannen zumindest der Fläche, die mit dem Erzeugnis (M) in Berührung kommt, derart einwirken, dass die Bildung von Falten auf der Oberfläche des Tuches (8) verhindert wird.

9. Einheit nach den Ansprüchen 1, 2, 5, 6 und 8, **dadurch gekennzeichnet, dass** die Spannmittel (8t) aus den Festklemm- und Lösemitteln (9) bestehen.

10. Einheit nach Anspruch 1, worin die Dichtung (4) teilweise, nämlich um den Betrag (H), von der Arbeitswand (5) der Schale (2) hervorsteht, **dadurch gekennzeichnet, dass** das Trennflächenelement aus einem Tuch (8) besteht, dessen Dicke (K) ausreichend ist, um zumindest den Höhenunterschied (H) zwischen der Arbeitswand (5) und dem hervorstehenden Abschnitt der Dichtung (4) zu beschränken.

11. Einheit nach Anspruch 1, **dadurch gekennzeichnet, dass** die Arbeitswand (5) einteilig mit der Schale (2) ausgeführt ist.

12. Einheit nach Anspruch 1, **dadurch gekennzeichnet, dass** die Arbeitswand (5) mit der Schale (2) verbunden ist.

13. Einheit nach Anspruch 1, **dadurch gekennzeichnet, dass** die Arbeitswand (5) steif ausgeführt ist und mit mehreren, in der Wand (5) angefertigten Löchern versehen ist, um die Verbindung der zwei Kammern (7, 7e) mit der Unterdruckquelle zu ermöglichen.

14. Einheit nach Anspruch 1, **dadurch gekennzeichnet, dass** die Arbeitswand (5) aus porösem Material gefertigt ist, um die Verbindung der zwei Kammern (7, 7e) mit der Unterdruckquelle zu ermöglichen.

15. Einheit nach Anspruch 1, **dadurch gekennzeichnet, dass** die Arbeitswand (5) aus porösem, durch Sintern erhaltenen Material gefertigt ist, um die Verbindung der zwei Kammern (7, 7e) mit der Unterdruckquelle zu ermöglichen.

16. Einheit nach Anspruch 1, **dadurch gekennzeichnet, dass** die Arbeitswand (5) aus porösem, durch Polymerisation erhaltenen Material gefertigt ist, um die Verbindung der zwei Kammern (7, 7e) mit der Unterdruckquelle zu ermöglichen.

17. Einheit nach Anspruch 1, **dadurch gekennzeichnet, dass** die Arbeitswand (5) aus Metallgeflecht besteht.

18. Einheit nach Anspruch 1, **dadurch gekennzeichnet, dass** die Arbeitswand (5) so geformt ist, dass sie der Oberfläche (S) des aufzunehmenden Erzeugnisses (M) angepasst ist.

## Revendications

1. Une unité pour prélever des produits en céramique ou similaires, ladite unité (1) comprenant au moins :
- un plateau (2) associé à un groupe d'actionnement (3) ;
- une garniture d'étanchéité (4) placée au moins le long du périmètre d'au moins une paroi utile (5) du plateau (2) et destinée à agir en contact avec une surface (S) du produit (M) ;
- des moyens (6) destinés à générer un vide à l'intérieur d'au moins une première chambre (7) formée par la paroi utile (5) avec l'intérieur du plateau (2) et en communication avec au moins une deuxième chambre (7e) à travers la paroi utile (5) qui est perméable aux liquides ; la deuxième chambre (7e) étant délimitée périmétriquement par la garniture (4) de manière à ce que ledit vide soit appliqué sur les surfaces opposées et se faisant face de la paroi (5) et, respectivement, de la surface (S) du produit (M) quand la garniture (4) vient en contact stable avec ladite surface (S) pour permettre le prélèvement du produit ; l'unité (1) étant **caractérisée en ce qu'**elle comprend en outre un élément d'interface (8), poreux et perméable à l'air, placé au moins sur la garniture d'étanchéité (4) et formant une surface plus déformable que la garniture (4) elle-même et imperméable aux liquides, ou hydrophobe, interposée entre la garniture (4) et la surface (S) du produit (M) quand le contact stable est établi.

2. L'unité selon la revendication 1, **caractérisée en ce qu'**entre l'élément d'interface (8) et le plateau (2), sont interposés des moyens (9) de blocage / déblocage de l'élément d'interface (8) avec le/du plateau (2), de manière à en permettre respectivement le positionnement sur la garniture (4) et l'éloignement de cette même garniture (4).

3. L'unité selon la revendication 1, **caractérisée en ce que** l'élément d'interface consiste en une seule toile déformable (8) présentant des propriétés adéquates de porosité et d'imperméabilité, recouvrant complètement, comme un chapeau, la paroi utile (5) du plateau (2) et la garniture (4).

4. L'unité selon la revendication 2, **caractérisée en ce que** l'élément d'interface consiste en une toile (8) et les moyens (9) de blocage et déblocage de la toile (8) comprennent un élément annulaire élastique (10) destiné à assujettir/relâcher la toile (8) à/de la surface périmétrique du plateau (2) proche de sa paroi utile (5).

5. L'unité selon la revendication 2, **caractérisée en ce que** l'élément d'interface consiste en une toile (8) et les moyens de blocage/déblocage (9) comprennent un rouleau d'enroulement/déroulement (11) monté sur une paroi (2a) du plateau (2) et destiné à dérouler et réenrouler la toile (8) de manière à ce qu'elle couvre et découvre la paroi utile (5) et, quand la paroi utile (5) est couverte, à ce qu'elle soit immobilisée de façon sûre à un élément de fixation (12) situé sur la paroi (2b) opposée du plateau (2).

6. L'unité selon la revendication 2, **caractérisée en ce que** l'élément d'interface consiste en une toile (8) et les moyens de blocage/déblocage (9) comprennent des tirants (13) associés à au moins deux côtés opposés de la toile (8) et pouvant être fixés à ou détachés de saillies (14) respectives situées sur des parois correspondantes du plateau (2).

7. L'unité selon la revendication 1, **caractérisée en ce que** l'élément d'interface (8) consiste en une toile (8) qui est lavable.

8. L'unité selon la revendication 1, **caractérisée en ce que** l'élément d'interface consiste en une toile (8) sur laquelle agissent des moyens (8t) destinés à tendre au moins la surface qui vient en contact avec le produit (M) afin d'empêcher la formation de plis sur la surface de la toile (8).

9. L'unité selon les revendications 1, 2, 5, 6 et 8, **caractérisée en ce que** les moyens tendeurs (8t) sont constitués par les moyens de blocage/déblocage (9).

10. L'unité selon la revendication 1, où la garniture (4) dépasse partiellement, d'une quantité (H), de la paroi utile (5) du plateau (2), **caractérisée en ce que** ledit élément d'interface consiste en une toile (8) dont l'épaisseur (K) est suffisante au moins pour limiter la différence de hauteur (H) entre la paroi utile (5) et la partie de la garniture (4) qui dépasse.

11. L'unité selon la revendication 1, **caractérisée en ce que** la paroi utile (5) est réalisée en corps unique avec le plateau (2).

12. L'unité selon la revendication 1, **caractérisée en ce que** la paroi utile (5) est associée au plateau (2).

13. L'unité selon la revendication 1, **caractérisée en ce que** la paroi utile (5) est de type rigide, dotée d'une pluralité de trous réalisés dans la paroi (5) elle-même de manière à permettre aux deux chambres (7, 7e) de communiquer avec la source du vide.

14. L'unité selon la revendication 1, **caractérisée en ce que** la paroi utile (5) est réalisée dans un matériau poreux de manière à permettre aux deux chambres (7, 7e) de communiquer avec la source du vide.

15. L'unité selon la revendication 1, **caractérisée en ce que** la paroi utile (5) est réalisée dans un matériau poreux obtenu par sintérisation de manière à permettre aux deux chambres (7, 7e) de communiquer avec la source du vide.

16. L'unité selon la revendication 1, **caractérisée en ce que** la paroi utile (5) est réalisée dans un matériau poreux obtenu par polymérisation de manière à permettre aux deux chambres (7, 7e) de communiquer avec la source du vide.

17. L'unité selon la revendication 1, **caractérisée en ce que** la paroi utile (5) est réalisée à partir d'un treillis métallique.

18. L'unité selon la revendication 1, **caractérisée en ce que** la paroi utile (5) est profilée de manière à épouser la surface (S) du produit (M) à prélever.
